# EUROPEAN PATENT APPLICATION

(11) **EP 4 628 526 A1**
(43) Date of publication of application: **08.10.2025**
(21) Application number: 23899769.6
(22) Date of filing: 22.11.2023
(51) Int. Cl.: C08K 5/5393, C07F 9/38, C08K 5/5313, C08L 77/06, C08L 77/02, C08K 7/14

(54) **ALKYL PHOSPHINATE COMPOSITE SALT, AND PREPARATION METHOD THEREFOR AND USE THEREOF**

(30) Priority: 05.12.2022 CN 202211549774
(71) Applicant: KINGFA SCI. & TECH. CO., LTD., Guangzhou, Guangdong 510663 (CN)
(72) Inventor: LI, Jide, Guangzhou, Guangdong 510663 (CN); CHEN, Pingxu, Guangzhou, Guangdong 510663 (CN); YE, Nanbiao, Guangzhou, Guangdong 510663 (CN); CHAI, Shengyong, Guangzhou, Guangdong 510663 (CN); WANG, Tinghong, Guangzhou, Guangdong 510663 (CN); LIU, Zhen, Guangzhou, Guangdong 510663 (CN); ZENG, Qingliang, Guangzhou, Guangdong 510663 (CN)
(74) Representative: Meyer, Thorsten
(86) International application number: PCT/CN2023/133150
(87) International publication number: WO 2024/120190

(57) **Abstract**

The present disclosure relates to an alkylphosphonic acid complex salt, and a preparation method and a use thereof. The alkylphosphonic acid complex salt contains alkylphosphonate, crystal water and hydroxide ion in its structure, and optionally contains hydrogen alkylphosphonate and phosphite. The alkylphosphonic acid complex salt as a flame retardant synergist is combined with aluminum diethylphosphinate to serve as a flame retardant and applied in flame retardation of PA66 and PA6, which can effectively improve the flame-retardant effects of the PA66 and PA6 in their condensed phases. Further, a carbon layer is formed after burning and the carbon layer has a dense and complete structure. At the same time, the mold fouling phenomenon that easily occurs during the injection molding process of flame-retarded nylon can be effectively reduced, and the flame-retarded nylon may be applied in expanded fields.

## Description

### TECHNICAL FIELD

The present disclosure relates to the field of organic synthesis technology, and specifically relates to an alkylphosphonic acid complex salt, and a preparation method and a use thereof.

### BACKGROUND

Since aluminum phosphite has a good, synergistic flame-retardant effect with aluminum diethylphosphinate (ADP), low water solubility and low acidity, it is currently widely used as a flame retardant synergist and applied to glass fiber reinforced engineering plastics, such as nylon, polyester and other systems, and has good flame retardancy. It has been disclosed in Chinese Patent application CN 104114485A that a mixture of aluminum hydrogen phosphite and aluminum salts is significantly more stable than pure aluminum phosphite. However, aluminum phosphite and aluminum hydrogen phosphite both contain a highly reductive phosphorus-hydrogen bond, so they still show poor thermal stability. They are easily decomposed to produce highly toxic phosphine gas which is flammable in the air during a high-temperature decomposition process, thereby bringing a great safety hazard. At the same time, since aluminum phosphite is an inorganic salt and has poor compatibility with a polymer matrix, an increased addition amount of the aluminum phosphite, as a synergistic flame retardant, will have a great impact on the mechanical properties and processing properties of the polymer matrix, which seriously limits the application of aluminum phosphite.

It has been disclosed in Chinese Patent application CN 105646938A that, compared with aluminum phosphite, aluminum alkylphosphonate (alkylphosphonic acid aluminum salt) exhibits improved compatibility with resin matrices by replacing a phosphorus-hydrogen (P-H) bond with a phosphorus-carbon (P-C) bond. Additionally, aluminum alkylphosphonate generates no phosphine gas, which is highly toxic and flammable, during its decomposition process, and demonstrates higher thermal stability than aluminum phosphite.

As flame retardant synergists of aluminum diethylphosphinate, aluminum phosphite and aluminum alkylphosphonate themselves do not have good flame-retardant properties, but can improve the flame-retardant efficiency of aluminum diethylphosphinate to a certain extent. A flame-retardant system comprising aluminum alkylphosphonate and aluminum diethylphosphinate can effectively reduce screw corrosion caused in the resin processing process, and the flame-retarded polymer matrix shows better whiteness.

During a fire, most deaths are caused by smoke. The better the flame-retardant effect of a condensed phase, the greater the reduction in smoke during the fire. That is, under a same flame-retardant rating, a superior flame-retardant effect of the condensed phase is beneficial for its application. In the actual production process, it has been found that, when aluminum phosphite or aluminum alkylphosphonate is combined with aluminum diethylphosphinate and applied in flame-retarded Polyamide 66 (PA66, polyhexamethylene adipamide) or Polyamide 6 (PA6, polycaprolactam), mold fouling is easily generated during the injection molding process. Moreover, the synthesized material exhibits poor flame retardancy in its condensed phase, thereby restricting its applications.

### SUMMARY OF THE DISCLOSURE

An objective of the present disclosure is to overcome shortcomings of the prior art and provide an alkylphosphonic acid complex salt, which is combined with aluminum diethylphosphinate to serve as a flame retardant and applied in flame-retarded PA66 and PA6 to reduce mold fouling generated during an injection molding process. In addition, the synergistic interaction between alkylphosphonic acid complex salt and aluminum diethylphosphinate can reduce the decomposition and gasification of aluminum diethylphosphinate to a large extent, and enhance a flame-retardant effect of the flame-retarded PA66 and PA6 in a condensed phase in flame-retarded applications.

Another objective of the present disclosure is to provide a preparation method of the alkylphosphonic acid complex salt.

Yet another objective of the present disclosure is to provide a use of the alkylphosphonic acid complex salt, serving as a flame retardant synergist of a diethylphosphinate.

To achieve the above objectives, the present disclosure provides the following technical solutions.

An alkylphosphonic acid complex salt, having a structural formula shown in formula (I): 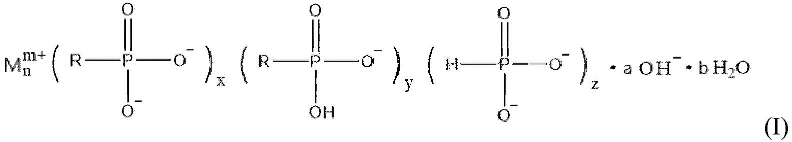
wherein in formula (I), *R* is ethyl; *x* represents 2.25-2.99; *y* represents 0-0.39; *z* represents *0-0.10; a* represents 0.02-1.0, and *b* represents 1.0-2.0;
*Mis* aluminum, n=2, and m=3.

In the present disclosure, an alkylphosphonic acid complex salt is provided, wherein the alkylphosphonic acid complex salt contains alkylphosphonate (alkylphosphonic acid salt), crystal water and hydroxide ion, and optionally contains hydrogen alkylphosphonate and phosphite. The alkylphosphonic acid complex salt is combined with aluminum diethylphosphinate to serve as a flame retardant and applied in flame-retarded PA66 and PA6, which can greatly reduce the decomposition and gasification of aluminum diethylphosphinate, effectively improve the flame-retardant properties of the flame-retarded PA66 and flame-retarded PA6 in their condensed phases, and simultaneously reduce the mold fouling generated in the injection molding process.

Preferably, *x* represents 2.45-2.90; *y* represents 0.05-0.09; *z* represents 0.01-0.10; *a* represents 0.1-1.0.

Preferably, a median particle diameter, D₅₀, of the alkylphosphonic acid complex salt is in a range of from 1 µm to 100 µm.

A preparation method of the alkylphosphonic acid complex salt, comprising the following steps:
subjecting alkylphosphonic acid to react with aluminum hydroxide in water, and then subjecting a resulting mixture to precipitation, filtration, washing and drying at 105-120 °C successively to obtain the alkylphosphonic acid complex salt; the alkylphosphonic acid and aluminum hydroxide are reacted at a reaction temperature of 60-150 °C. When the reaction temperature is 60-130 °C, a hydrogen alkylphosphonate may be generated.

Preferably, the preparation method of the alkylphosphonic acid complex salt also comprises steps of: mixing alkylphosphonic acid with phosphorous acid, then subjecting a resulting mixture to react with aluminum hydroxide in water, and then subjecting the resulting mixture after reaction to precipitation, filtration, washing, and drying at 105-120°C successively to obtain the alkylphosphonic acid complex salt; the reaction temperature is 60-150°C. The phosphite can be generated, by mixing alkylphosphonic acid with phosphorous acid and then subjecting the resulting mixture to react with aluminum hydroxide in water. Specifically, the alkylphosphonic acid can be prepared by using one of methods as following:
Method 1:
   hydrolyzing an diester of alkylphosphonic acid under alkaline condition to obtain an alkylphosphonate, and then acidifying the alkylphosphonate to obtain the alkylphosphonic acid.
Or Method 2:
   subjecting an phosphorous acid to react with ethylene in an aqueous solution with presence of an initiator to obtain the alkylphosphonic acid.

Specifically, Method 1 is performed as following: mixing diethyl ethylphosphonate with an aqueous solution of sodium hydroxide to obtain a mixture, heating the mixture until a temperature reaches 85-95 °C, holding the temperature at 85-95 °C for 4-6 hours, then cooling to obtain an ethylphosphonate, adding an aqueous solution of sulfuric acid to obtain an ethylphosphonic acid.

Method 2 is performed as following: placing solid phosphorous acid, water and sodium persulfate into an autoclave, replacing air with nitrogen, introducing ethylene into the autoclave through a pressure reducer and keeping a constant pressure of 1.4-1.8 MPa, heating until a temperature reaches 80-90 °C, holding the temperature at 80-90 °C for 5-7 hours, and continuously adding an aqueous solution of sodium persulfate when the temperature is held at 80-90 °C, and then keeping the temperature at 85-95°C for 0.5-1.5 hours, cooling and venting to obtain an ethylphosphonic acid.

Preferably, the initiator is an organic persulfide.

The present disclosure also protects a use of the alkylphosphonic acid complex salt, as a flame retardant synergist of a diethylphosphinate.

A composition, comprising the following components by weight: 1-7 parts of the above-mentioned alkylphosphonic acid complex salt; and 10-15 parts of aluminum diethylphosphinate.

The present disclosure also protects a use of the composition as a flame retardant in flame retardation of PA66 and PA6.

A reinforced flame-retarded nylon, comprising the following components by weight: 45-65 parts of PA66; 0-10 parts of PA6; 20-30 parts of glass fiber; 1-7 parts of the above-mentioned alkylphosphonic acid complex salt; and 10-15 parts of aluminum diethylphosphinate.

Compared with the prior art, the present disclosure has the following beneficial effects.

The present disclosure provides an alkylphosphonic acid complex salt, which contains alkylphosphonate, crystal water and hydroxide ion, and optionally contains hydrogen alkylphosphonate and/or phosphite. The alkylphosphonic acid complex salt is used as a flame retardant synergist and combined with aluminum diethylphosphinate to serve as a flame retardant, which can greatly reduce the decomposition and gasification of aluminum diethylphosphinate, and thus enhance the flame-retardant effect of polymers in their condensed phases. Moreover, after burning, a dense and complete carbon layer structure is formed. At the same time, the alkylphosphonic acid complex salt can effectively reduce the mold fouling generated in the injection molding process when applied in flame-retarded PA66 and flame-retarded PA6.

### BRIEF DESCRIPTION OF DRAWINGS

Figure 1 is a scanning electron microscope (SEM) image of a carbon layer on a surface of a flame-retarded specimen prepared in Comparative Example 6 after burning;
Figure 2 is a SEM image of a carbon layer on a surface of a flame-retarded specimen prepared in Comparative Example 7 after burning;
Figure 3 is a SEM image of a carbon layer on a surface of a flame-retarded specimen prepared in Comparative Example 8 after burning;
Figure 4 is a SEM image of a carbon layer on a surface of a flame-retarded specimen prepared in Comparative Example 9 after burning;
Figure 5 is a SEM image of a carbon layer on a surface of a flame-retarded specimen prepared in Comparative Example 10 after burning;
Figure 6 is a SEM image of a carbon layer on a surface of a flame-retarded specimen prepared in Comparative Example 11 after burning;
Figure 7 is a SEM image of a carbon layer on a surface of a flame-retarded specimen prepared in Example 8 after burning;
Figure 8 is a SEM image of a carbon layer on a surface of a flame-retarded specimen prepared in Example 9 after burning;
Figure 9 is a SEM image of a carbon layer on a surface of a flame-retarded specimen prepared in Example 10 after burning;
Figure 10 is a SEM image of a carbon layer on a surface of a flame-retarded specimen prepared in Example 11 after burning;
Figure 11 is a SEM image of a carbon layer on a surface of a flame-retarded specimen prepared in Example 12 after burning;
Figure 12 is a SEM image of a carbon layer on a surface of a flame-retarded specimen prepared in Example 13 after burning;
Figure 13 is a SEM image of a carbon layer on a surface of a flame-retarded specimen prepared in Example 14 after burning;
Figure 14 is a SEM image of a carbon layer on a surface of a flame-retarded specimen prepared in Example 15 after burning;
Figure 15 is a SEM image of a carbon layer on a surface of a flame-retarded specimen prepared in Example 16 after burning.

### DETAILED DESCRIPTION

The present disclosure is further described in detail below in conjunction with specific examples, which are only intended to illustrate the present disclosure, rather than to limit the scope of the present disclosure. Testing methods used in the following examples are conventional ones, unless otherwise specified; materials or reagents used are commercially available, unless otherwise specified.

### Example 1

An alkylphosphonic acid complex salt was prepared by using a method as following, and the method included the following steps:
S1. placing solid phosphorous acid, water and sodium persulfate into an autoclave, replacing air with nitrogen, introducing ethylene into the autoclave through a pressure reducer and keeping a constant pressure of 1.6 MPa, heating until a temperature reaches 85 °C, holding the temperature at 85 °C for 6 hours, and continuously adding an aqueous solution of sodium persulfate when the temperature was held at 85 °C, and then keeping the temperature at 90 °C for 1 hour, cooling and venting to obtain an aqueous solution of ethylphosphonic acid; wherein the aqueous solution of sodium persulfate was prepared with 5 g sodium persulfate and 20 g water;
S2. mixing the aqueous solution of ethylphosphonic acid with aluminum hydroxide, placing a resulting mixture into an autoclave to react at T₁ °C for 2 hours, then subjecting the resulting mixture after reaction to cooling and filtration successively, washing a filter cake for 3 times with water in an amount (weight) of three times that of the filter cake, and then drying the filter cake to a constant weight at a temperature of T₂ °C to obtain the alkylphosphonic acid complex salt.

### Examples 2-5

In each of Examples 2-5, steps in the preparation method of the alkylphosphonic acid complex salt were the same as those in Example 1, except that in step S2, the phosphorous acid was added into an aqueous solution of ethylphosphonic acid, then mixed with aluminum hydroxide, placed in an autoclave to react at T₁ °C for 2h, and then cooled and filtered successively; the filter cake was washed for 3 times with water in an amount (weight) of three times that of the filter cake and then dried to a constant weight at a temperature of T₂ °C to obtain the alkylphosphonic acid complex salt.

### Example 6

In Example 6, steps in the preparation method of the alkylphosphonic acid complex salt were the same as those in Example 1, except that in step S2, the reaction temperature and drying temperature were different.

### Example 7

An alkylphosphonic acid complex salt is prepared by using a method as following, and the method included the following steps:
S1. mixing 166 g diethyl ethylphosphonate and 800 g 15wt% of aqueous sodium hydroxide solution, heating a resulting mixture until a temperature reached 90 °C, holding the temperature at 90 °C for 5 hours, then cooling to obtain an ethylphosphonate, adding 735 g 20 wt% of aqueous sulfuric acid solution to obtain an aqueous solution of ethylphosphonic acid;
S2. mixing the aqueous solution of ethylphosphonic acid with 61 g aluminum hydroxide, placing a resulting mixture into an autoclave to react at 130 °C for 2 hours, then subjecting the resulting mixture after reaction to cooling and filtration successively, washing a filter cake for 3 times with water in an amount (weight) of three times that of the filter cake, and then drying the filter cake to a constant weight at a temperature of 105 °C to obtain the alkylphosphonic acid complex salt.

Quantities of raw materials and process parameters in Examples 1-6 were shown in Table 1.

**Table 1 Quantities of raw materials and process parameters in Examples 1-6**

| | | Example 1 | Example 2 | Example 3 | Example 4 | Example 5 | Example 6 |
|---|---|---|---|---|---|---|---|
| S1 | Phosphorous acid, g | 82 | 82 | 82 | 82 | 82 | 82 |
| | Water, g | 164 | 164 | 164 | 164 | 164 | 164 |
| | Sodium persulfate, g | 1 | 1 | 1 | 1 | 1 | 1 |
| S2 | Phosphorous acid, g | - | 0.28 | 0.28 | 2.75 | 2.75 | - |
| | Aluminium hydroxide, g | 52.1 | 53.0 | 62.5 | 53.0 | 53.0 | 53.0 |
| | T₁, °C | 150 | 90 | 60 | 90 | 150 | 90 |
| | T₂, °C | 120 | 120 | 120 | 105 | 105 | 105 |

### Comparative Examples 1-3

An alkylphosphonic acid complex salt was prepared in each of Comparative Examples 1-3 by using a method as following, and the method included the following steps:
S1. placing solid phosphorous acid, water and sodium persulfate into an autoclave, replacing air with nitrogen, introducing ethylene into the autoclave through a pressure reducer and keeping a constant pressure of 1.6 MPa, heating until a temperature reaches 85 °C, holding the temperature at 85 °C for 6 hours, and continuously adding an aqueous solution of sodium persulfate when the temperature was held at 85 °C, and then keeping the temperature at 90 °C for 1 hour, cooling and venting to obtain an aqueous solution of ethylphosphonic acid; wherein the aqueous solution of sodium persulfate was prepared with 5 g sodium persulfate and 20 g water;
S2. neutralizing the aqueous solution of ethylphosphonic acid with 20 wt.% of aqueous sodium hydroxide solution to pH=7, thereby obtaining an aqueous solution of sodium ethylphosphonate;
S3. placing the aqueous solution of sodium ethylphosphonate into an autoclave, heating until a temperature reached to T₃ °C, continuously adding an aqueous solution of aluminum sulfate for reaction within 120 minutes by using a metering pump, then subjecting a resulting mixture after reaction to cooling and filtration successively, washing a filter cake for 3 times with water in an amount (weight) of three times that of the filter cake, and then drying the filter cake to a constant weight at a temperature of T₄ °C to obtain the alkylphosphonic acid complex salt.

### Comparative Example 4

In Comparative Example 4, steps in the preparation method of the alkylphosphonic acid complex salt were the same as those in Comparative Examples 1-3, except that in step S2, a phosphorous acid was added into the aqueous solution of ethylphosphonic acid, and then a resulting mixture was neutralized with 20 wt.% of aqueous sodium hydroxide solution to pH=7, thereby obtaining an aqueous solution of sodium ethylphosphonate /sodium phosphite.

Quantities of raw materials and process parameters in Comparative Examples 1-4 were shown in Table 2.

**Table 2 Raw materials and process parameters in Comparative Examples 1-4**

| | | Comparative Example 1 | Comparative Example 2 | Comparative Example 3 | Comparative Example 4 |
|---|---|---|---|---|---|
| S1 | Phosphorous acid, g | 82 | 82 | 82 | 82 |
| | Water, g | 164 | 164 | 164 | 164 |
| | Sodium persulfate, g | 1 | 1 | 1 | 1 |
| S2 | Phosphorous acid, g | - | - | - | 0.28 |
| S3 | T₃, °C | 150 | 90 | 150 | 90 |
| | T₄, °C | 150 | 150 | 120 | 120 |

### Comparative Example 5

A sample prepared in Example 4 was taken and dried at 150 °C to a constant weight.

A median particle diameter, D₅₀, of the alkylphosphonic acid complex salt obtained in each of the above Examples 1-7 was in a range of from 1 µm to 100 µm. The median particle diameter was determined by using a method as following: moistening an appropriate amount of sample with a small amount of ethanol, adding the sample into water, gently stirring it with a glass rod, and testing by using a Malvern laser particle size analyzer. Testing results were shown in Table 3.

**Table 3 Testing results of D₅₀ in various examples**

| | Example 1 | Example 2 | Example 3 | Example 4 | Example 5 | Example 6 | Example 7 |
|---|---|---|---|---|---|---|---|
| D₅₀, µm | 29 | 32 | 36 | 33 | 38 | 34 | 10 |

The alkylphosphonic acid complex salts prepared in the above-mentioned Examples 1-7 and Comparative Examples 1-5 were measured by proton nuclear magnetic resonance (¹H NMR) spectroscopy.

A method for determining a molar content of crystal water was as follows, comprising steps of: drying the prepared alkylphosphonic acid complex salt, quickly taking the alkylphosphonic acid complex salt out and placing it in a dryer, cooling the alkylphosphonic acid complex salt to room temperature and weighing it to obtain m₁, then drying the alkylphosphonic acid complex salt to a constant weight at 150 °C, quickly taking the alkylphosphonic acid complex salt out and placing it in the dryer, cooling the alkylphosphonic acid complex salt to room temperature and weighing it to obtain m₀, and calculating the molar content of the crystal water = (m₁-m₀) × M/(18 × m₀), wherein *M* was molecular weight of the alkylphosphonic acid complex salt with the absence of the crystal water.

A method of calculating a molar content, a, of the hydroxide ion was as follows, comprising steps of: determining molar contents of various components in the alkylphosphonic acid complex salt, respectively; then calculating the molar content of hydroxide ion, *a,* through an equation, *a=m* × *n-*2*x-y-*2*z;* wherein
(1) *x, y* and z were determined according to ¹H NMR spectroscopy;
(2) a mass content of phosphorus in the alkylphosphonic acid complex salt was determined according to Chinese National Standard, GB 11893-1989;
(3) a mass content of aluminum in the alkylphosphonic acid complex salt was determined according to Chinese National Standard, GB5009.182-2017;
(4) a molar ratio of phosphorus to aluminum was calculated based on results obtained in step (2) and step (3), and then a mass content of hydroxide ion was calculated by subtraction based on the results obtained in step (1) and the testing result of the crystal water; further, the molar content, a, of the hydroxide ion was calculated according to the equation, *a=m* × *n-*2*x-y-*2*z.*

Testing results were shown in Table 4.

**Table 4 Testing results in Examples 1-7 and Comparative Examples 1-5**

| | *M* | *n* | *x* | *y* | *z* | *a* | *b* |
|---|---|---|---|---|---|---|---|
| Example 1 | Al | 2 | 2.99 | - | - | 0.02 | 1.0 |
| Example 2 | Al | 2 | 2.90 | 0.07 | 0.01 | 0.1 | 1.1 |
| Example 3 | Al | 2 | 2.45 | 0.07 | 0.01 | 1.0 | 1.0 |
| Example 4 | Al | 2 | 2.81 | 0.08 | 0.10 | 0.1 | 2.0 |
| Example 5 | Al | 2 | 2.85 | 0 | 0.10 | 0.1 | 1.1 |
| Example 6 | Al | 2 | 2.91 | 0.08 | 0 | 0.1 | 1.1 |
| Example 7 | Al | 2 | 2.27 | 0.37 | 0.10 | 0.9 | 1.1 |
| Comparative Example 1 | Al | 2 | 3 | 0 | 0 | 0 | 0 |
| Comparative Example 2 | Al | 2 | 2.95 | 0.10 | 0 | 0 | 0 |
| Comparative Example 3 | Al | 2 | 3 | 0 | 0 | 0 | 1.0 |
| Comparative Example 4 | Al | 2 | 2.95 | 0.09 | 0.01 | 0 | 1.0 |
| Comparative Example 5 | Al | 2 | 2.81 | 0.08 | 0.10 | 0.1 | 0 |

As can be seen from Table 4, the alkylphosphonic acid complex salts prepared by the method in the present disclosure all contained alkylphosphonate, hydroxide ion and crystal water. The introduction of hydrogen alkylphosphonate was controlled by changing the reaction temperature, T₁. When T₁ was 60-130 °C, the prepared alkylphosphonic acid complex salt would include the hydrogen alkylphosphonate; when T₁ was 130-150 °C, the prepared alkylphosphonic acid complex salt would not include the hydrogen alkylphosphonate. Moreover, whether the alkylphosphonic acid complex salt contained a phosphite or not was controlled by addition of a phosphorous acid. In Comparative Examples 1-4, the alkylphosphonic acid complex salts were all prepared by firstly neutralizing an aqueous solution of ethylphosphonic acid under alkaline condition and then performing a metathesis reaction with an aluminum salt, so none of them included a hydroxide ion. In Comparative Example 5, the alkylphosphonic acid complex salt prepared in Example 4 was dried to a constant weight at a temperature of 150 °C, so it did not contain crystal water.

### USES

In Comparative Examples 6-11 and Examples 8-16, commercially available aluminum phosphite and the alkylphosphonic acid complex salts prepared in Comparative Examples 1-7 and Examples 1-6 were respectively used as flame retardant synergists. They were blended with aluminum diethylphosphinate, glass fiber, PA66 and PA6, followed by an extrusion process. Quantities of various components in Comparative Examples 6-11 and Examples 8-16 were respectively shown in Table 5. The above-mentioned aluminum diethylphosphinate, glass fiber, PA66 and PA6 were all commercially available, and raw materials used in parallel experiments were all the same ones.

**Table 5 Quantities of various components in Comparative Examples 6-11 (CE6-CE11) and Examples 8-16 (E8-E16) (parts by weight)**

| | | CE6 | CE7 | CE8 | CE9 | CE10 | CE11 | E8 | E9 | E10 | E11 | E12 | E13 | E14 | E15 | E16 |
|---|---|---|---|---|---|---|---|---|---|---|---|---|---|---|---|---|
| PA66 | | 52 | 52 | 52 | 52 | 52 | 52 | 52 | 52 | 52 | 52 | 52 | 52 | 52 | 47 | 64 |
| PA6 | | 8 | 8 | 8 | 8 | 8 | 8 | 8 | 8 | 8 | 8 | 8 | 8 | 8 | 10 | 0 |
| Glass fiber | | 25 | 25 | 25 | 25 | 25 | 25 | 25 | 25 | 25 | 25 | 25 | 25 | 25 | 30 | 20 |
| Aluminum diethylhypophosphinate | | 12 | 12 | 12 | 12 | 12 | 12 | 12 | 12 | 12 | 12 | 12 | 12 | 12 | 10 | 15 |
| Flame retardant synergist | Aluminum phosphite | 3 | - | - | - | - | - | - | - | - | - | - | - | - | - | - |
| | CE1 | - | 3 | - | - | - | - | - | - | - | - | - | - | - | - | - |
| | CE2 | - | - | 3 | - | - | - | - | - | - | - | - | - | - | - | - |
| | CE3 | - | - | - | 3 | - | - | - | - | - | - | - | - | - | - | - |
| | CE4 | - | - | - | - | 3 | - | - | - | - | - | - | - | - | - | - |
| | CE5 | - | - | - | - | - | 3 | - | - | - | - | - | - | - | - | - |
| | E1 | - | - | - | - | - | - | 3 | - | - | - | - | - | - | 7 | 1 |
| | E2 | - | - | - | - | - | - | - | 3 | - | - | - | - | - | - | - |
| | E3 | - | - | - | - | - | - | - | - | 3 | - | - | - | - | - | - |
| | E4 | - | - | - | - | - | - | - | - | - | 3 | - | - | - | - | - |
| | E5 | - | - | - | - | - | - | - | - | - | - | 3 | - | - | - | - |
| | E6 | - | - | - | - | - | - | - | - | - | - | - | 3 | - | - | - |
| | E7 | - | - | - | - | - | - | - | - | - | - | - | - | 3 | - | - |

### PERFORMANCE ANALYSIS

Mold fouling phenomenon was observed during the production process of the materials prepared in Comparative Examples 6-11 and Examples 8-16. After the flame-retardant properties were tested, a burned specimen was subjected to surface treatment, and then a structure of a carbon layer on a surface of the specimen after burning was observed by using a scanning electron microscope. For the mold fouling phenomenon, "None" means that no mold fouling was generated during the production process of the material; "Very little" means that almost no mold fouling was generated during the production process of the material; "A little" means that a small amount of mold fouling was generated during the production process of the material; and "Much" means that a large amount of mold fouling was generated during the production process of the material.
(1) Vertical burning test: The vertical burning test was performed according to the Underwriters Laboratories Standard UL94-2006, with 5 specimens in each group. The following results were respectively recorded: self-extinguishing time after a first ignition, self-extinguishing time after a second ignition, and whether there was molten dripping or whether cotton was ignited during the burning process, wherein "V-0" means that the flame was extinguished within 30 seconds and no burning material fell down, after the specimen was subjected to a 10-second burning test twice; "V-1" means that the flame was extinguished within 60 seconds and no burning material fell down, after the specimen was subjected to the 10-second burning test twice.
(2) 85/85 Test (High humidity and temperature Test), for 168 hours, on precipitation: placing a specimen in an environment having a temperature of 85 °C and a relative humidity of 85% for 168 hours, and taking out the specimen and observing surfaces of the specimen by using a scanning electron microscope to determine whether precipitation occurs on the surfaces.
(3) Microstructure of carbon layer: igniting a flame-retarded specimen with a thickness of 0.8 mm for 10 seconds and then extinguishing it, repeating the igniting and extinguishing steps for 5 times, taking a burned part from the burned specimen and conducting gold plating to a surface of the burned part; then observing a structure of a carbon layer on the surface of the specimen after burning, by using a scanning electron microscope.

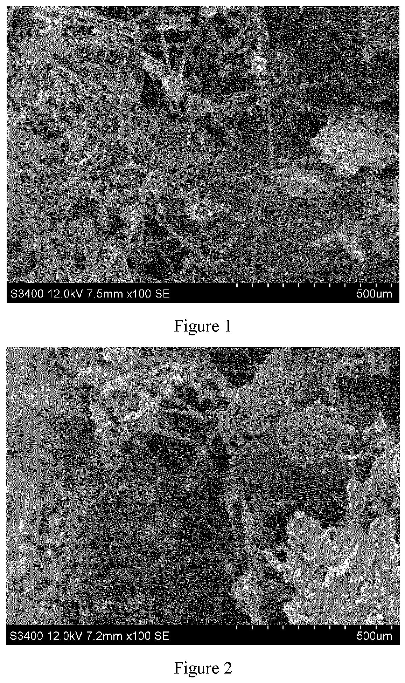

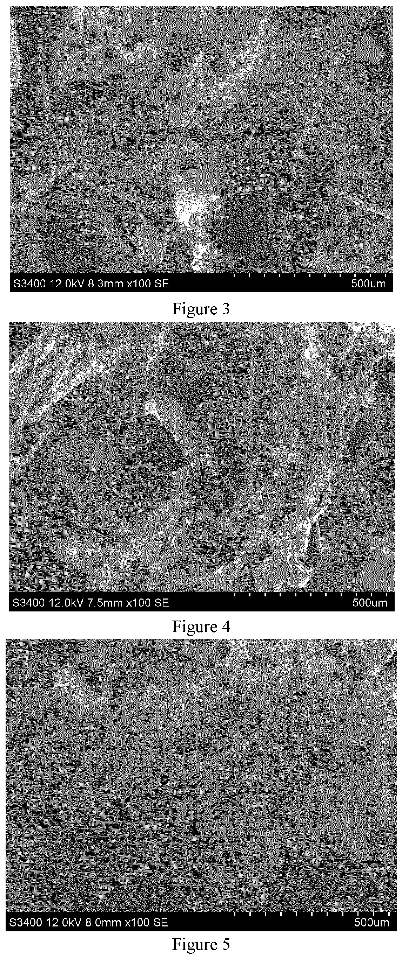

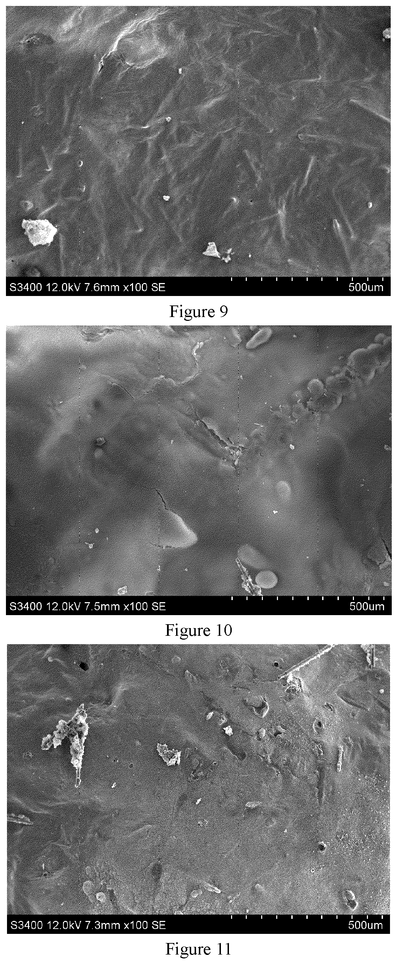

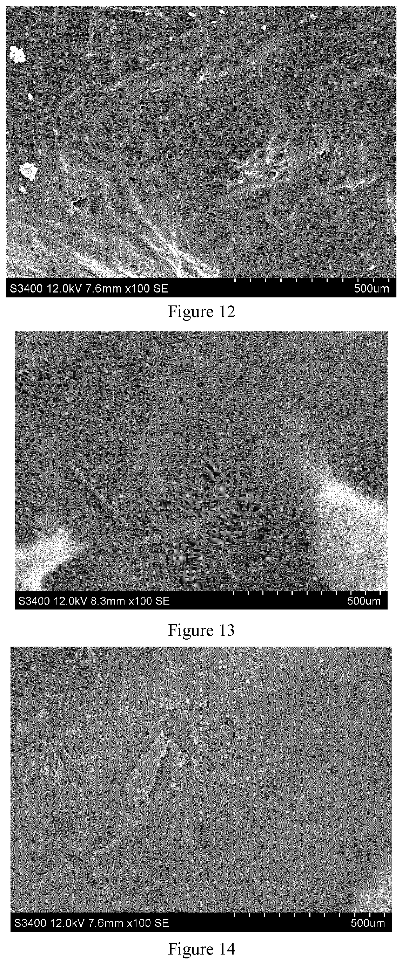

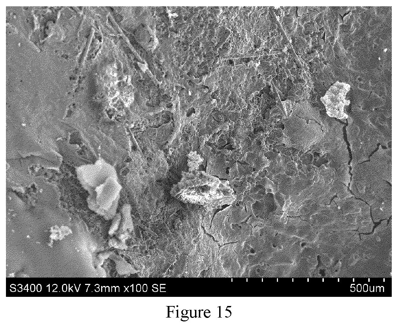

Testing results were shown in Table 6 and Figures 1-15.

**Table 6 Testing results in Comparative Examples 6-11 (CE6-CE11) and Examples 8-16 (E8-E16)**

| Performance index | CE6 | CE7 | CE8 | CE9 | CE10 | CE11 | E8 | E9 | E10 | E11 | E12 | E13 | E14 | E15 | E16 |
|---|---|---|---|---|---|---|---|---|---|---|---|---|---|---|---|
| Vertical burning test, 0.8mm | V-1 | V-1 | V-0 | V-0 | V-0 | V-0 | V-0 | V-0 | V-0 | V-0 | V-0 | V-0 | V-0 | V-0 | V-0 |
| Mold fouling in injection molding process | Much | Much | A little | Much | None | None | None | None | None | None | None | None | None | None | None |
| 85/85 Test, 168 hours, precipitation | None | None | None | None | None | None | None | None | None | None | None | None | None | None | None |

It could be seen from Table 6 that the alkylphosphonic acid complex salts described in the present disclosure were combined with aluminum diethylphosphinate to serve as flame retardants. When such flame retardants were applied in flame retardation of PA6 and PA66, no mold fouling was generated during the injection molding process, and the obtained material had good flame-retardant properties.

It could be seen from Comparative Example 6 that, when only aluminum phosphite and aluminum diethylphosphinate were used as a flame retardant and applied in flame retardation of PA6 and PA66, mold fouling was generated during the injection molding process, and the flame-retardant performance of the obtained material could only reach V-1 rating. It could be seen from Comparative Example 7 that, when the alkylphosphonic acid complex salt prepared in Comparative Example 1, which only included aluminum alkylphosphonate, was combined with aluminum diethylphosphinate to serve as a flame retardant and applied in flame retardation of PA6 and PA66, mold fouling was generated during the injection molding process, and the flame-retardant performance of the obtained material could only reach V-1 rating. It could be seen from Comparative Example 8 that, when the alkylphosphonic acid complex salt prepared in Comparative Example 2, which only included aluminum alkylphosphonate and aluminum hydrogen alkylphosphonate, was combined with aluminum diethylphosphinate to serve as a flame retardant and applied in flame retardation of PA6 and PA66, mold fouling was generated during the injection molding process. It could be seen from Comparative Example 9 that, when the alkylphosphonic acid complex salt prepared in Comparative Example 3, which only included aluminum alkylphosphonate and crystal water, was combined with aluminum diethylphosphinate to serve as a flame retardant and applied in flame retardation of PA6 and PA66, mold fouling was generated during the injection molding process. In addition, when the alkylphosphonic acid complex salt of the present disclosure was combined with aluminum diethylphosphinate to serve as a flame retardant, the obtained material had comparable mechanical properties to those prepared by combining commercially available aluminum phosphite with aluminum diethylphosphinate to serve as a flame retardant. Further, the obtained material could effectively reduce the generation of mold fouling during the injection molding process when applied in flame retardation of PA6 and PA66.

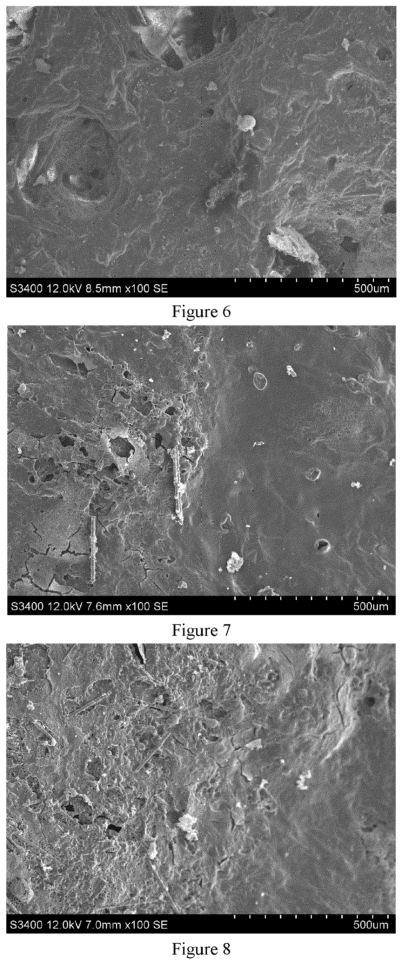

As could be seen from Figures 7-15, when the alkylphosphonic acid complex salt of the present disclosure was combined with aluminum diethylphosphinate to serve as a flame retardant and applied in PA66 and PA6, a carbon layer with a dense structure was formed on a surface of the flame-retarded specimen after burning, so that flammable gases and free radicals could be effectively prevented from overflowing from the carbon layer. That is, the PA66 and PA6 in their condensed phases had good flame-retardant performance. As could be seen from Figures 1-6, when the alkylphosphonic acid complex salt, not comprising hydroxide ions and/or crystal water, was combined with aluminum diethylphosphinate to serve as a flame retardant and applied in PA66 and PA6, the carbon layer formed on the surface of the flame-retarded specimen after burning was obviously incomplete and not dense. That is, the PA66 and PA6 in their condensed phases had a poor flame-retardant effect. When the alkylphosphonic acid complex salt prepared in Comparative Examples 4-5 was combined with aluminum diethylphosphinate and applied in flame retardation of PA6 and PA66, the mold fouling phenomenon in the injection molding process could be effectively reduced. However, the PA6 and PA66 in their condensed phases had a poor flame-retardant effect, which had restricted their applications to a certain extent.

Obviously, the above examples of the present disclosure are only examples for clearly illustrating the present disclosure, rather than limitations on embodiments of the present disclosure. For those skilled in the art, other changes or modifications in different forms can be made based on the above description. It is not necessary and impossible to list all the embodiments here. Any modifications, equivalent substitutions and improvements made within the spirit and principles of the present disclosure shall fall within the protection scope of the claims of the present disclosure.

## Claims

1. An alkylphosphonic acid complex salt, having a structural formula of formula (I): 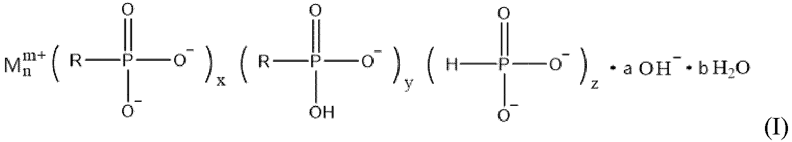 wherein in formula (I), R is ethyl; x represents 2.25-2.99; *y* represents 0-0.39; z represents 0-0.10; *a* represents 0.02-1.0, and b represents 1.0-2.0;
*M* is aluminum, n=2, and m=3.

2. The alkylphosphonic acid complex salt according to claim 1, wherein x represents 2.45-2.90; *y* represents 0.05-0.09; z represents 0.01-0.10; *a* represents 0.1-1.0.

3. The alkylphosphonic acid complex salt according to claim 1, wherein a median particle diameter, D₅₀, of the alkylphosphonic acid complex salt is in a range of from 1 µm to 100 µm.

4. A preparation method of the alkylphosphonic acid complex salt according to claim 1, comprising steps of:
subjecting alkylphosphonic acid to react with aluminum hydroxide in water, and then subjecting a resulting mixture to precipitation, filtration, washing and drying at 105-120 °C successively to obtain the alkylphosphonic acid complex salt; the alkylphosphonic acid and aluminum hydroxide are reacted at a reaction temperature of 60-150 °C.

5. The preparation method of the alkylphosphonic acid complex salt according to claim 4, wherein the preparation method further comprises steps of:
mixing alkylphosphonic acid with phosphorous acid, then subjecting a resulting mixture to react with aluminum hydroxide in water, and then subjecting the resulting mixture after reaction to precipitation, filtration, washing, and drying at 105-120°C successively to obtain the alkylphosphonic acid complex salt; the reaction temperature is 60-150°C.

6. The preparation method of the alkylphosphonic acid complex salt according to claim 4, wherein the alkylphosphonic acid can be prepared by using one of methods as following:
Method 1:
hydrolyzing an diester of an alkylphosphonic acid under alkaline condition to obtain an alkylphosphonate, and then acidifying the alkylphosphonate to obtain the alkylphosphonic acid; or
Method 2:
subjecting an phosphorous acid to react with ethylene in an aqueous solution with presence of an initiator to obtain the alkylphosphonic acid.

7. A use of the alkylphosphonic acid complex salt according to any one of claims 1-3, serving as a flame retardant synergist of aluminum diethylphosphinate.

8. A composition, comprising the following components by weight: 1-7 parts of the alkylphosphonic acid complex salt according to any one of claims 1-3; and 10-15 parts of aluminum diethylphosphinate.

9. A use of the composition according to claim 8 as a flame retardant in flame retardation of PA66 and PA6.

10. A reinforced flame-retarded nylon, comprising the following components by weight: 45-65 parts of PA66; 0-10 parts of PA6; 20-30 parts of glass fiber; 1-7 parts of the alkylphosphonic acid complex salt according to any one of claims 1-3; and 10-15 parts of aluminum diethylphosphinate.
